# EUROPÄISCHE PATENTSCHRIFT

(11) **EP 3 680 657 B1**
(45) Veröffentlichungstag und Bekanntmachung des Hinweises auf die Patenterteilung: **23.10.2024**
(21) Anmeldenummer: 19217041.3
(22) Anmeldetag: 17.12.2019
(51) Int. Cl.: G01N 31/22, G01N 21/78, G01N 21/80, G01N 21/77

(54) **VERFAHREN ZUM BEHANDELN VON INDIKATORFELDERN, INDIKATORFELD SOWIE TESTVORRICHTUNG MIT EINEM SOLCHEN INDIKATORFELD**
INDICATOR FIELD, METHOD FOR TREATING INDICATOR FIELDS AND TEST DEVICE COMPRISING SUCH AN INDICATOR FIELD
PROCÉDÉ DE TRAITEMENT DES CHAMPS D'INDICATEUR, CHAMP D'INDICATEUR AINSI QUE DISPOSITIF D'ESSAI DOTÉ D'UN TEL CHAMP D'INDICATEUR

(30) Priorität: 11.01.2019 DE 102019100664
(43) Veröffentlichungstag der Anmeldung: 15.07.2020
(73) Patentinhaber: AXAGARIUS GmbH & Co. KG, 52355 Düren (DE)
(72) Erfinder: Hoffmann, Dr. Jürgen, 52355 Düren (DE); Husmann, Dr. Ralph, 52355 Düren (DE); Lange, Dr. Dominik, 50858 Köln (DE); Prokisch, Dr. Christian, 52355 Düren (DE)
(74) Vertreter: Paul & Albrecht Patentanwälte PartG mbB

(56) Entgegenhaltungen:
- EP-A1- 3 614 141
- WO-A2-2009/133480
- DE-C- 530 530
- US-A- 2 915 373

## Beschreibung

Die vorliegende Erfindung betrifft ein Verfahren zum Behandeln einer Vielzahl von Indikatorfeldern zur Bestimmung des pH-Wertes einer wässrigen Lösung, wobei jedes Indikatorfeld wenigstens einen Indikatorfarbstoff enthält, der nicht ausblutend fixiert ist, insbesondere an einer Cellulose oder regenerierte Cellulose aufweisenden Schicht, und innerhalb eines pH-Umschlagbereiches seine Farbe ändert, und wobei die Indikatorfelder voneinander abweichende Pufferkapazitäten aufweisen. Ferner betrifft die Erfindung ein derart behandeltes Indikatorfeld sowie eine Testvorrichtung mit einem solchen Indikatorfeld.

Testvorrichtungen mit Indikatorfeldern der eingangs genannten Art sind im Stand der Technik seit langem bekannt. Sie dienen zur zumindest halbquantitativen Bestimmung des pH-Wertes einer wässrigen Lösung und werden meist in Form von Teststreifen angeboten. Sie umfassen einen Träger aus Kunststoff, an dem ein Indikatorfeld angeordnet ist. Das Indikatorfeld umfasst normalerweise eine Schicht aus saugfähigem Papier, das einen Indikatorfarbstoff enthält, der nicht ausblutend fixiert ist und innerhalb eines pH-Umschlagbereiches seine Farbe ändert. Die nicht ausblutende Fixierung des Indikatorfarbstoffs kann erfolgen, indem dieser chemisch an die Cellulosefaser des Trägers gebunden wird. Geeignete Verfahren sind beispielsweise in den Druckschriften DE 1 256 445 und DE 1 698 247 beschrieben, deren Inhalt hinsichtlich der nicht ausblutenden Fixierung hiermit ausdrücklich zum Inhalt der vorliegenden Beschreibung gemacht wird. Der Indikatorfarbstoff selbst hat Säure-/Basenfunktionen und verfügt somit über eine gewisse Säure-/Basenstärke bzw. Pufferkapazität. Um nun eine Farbänderung bzw. einen Farbumschlag des Indikatorfarbstoffs beim Eintauchen des Indikatorfeldes in eine wässrige Lösung zu bewirken, muss die wässrige Lösung ebenfalls eine gewisse Säure-/Basenstärke haben, um die Pufferkapazität des Indikatorfeldes zu überwinden. Wenn die Säure-/Basenstärke der wässrigen Lösung im Vergleich zur Pufferkapazität des Indikatorfeldes zu gering ist, zeigt das Indikatorfeld den pH-Wert der wässrigen Lösung verzögert bzw. nicht mehr zuverlässig an. Die Pufferkapazität des Indikatorfeldes schwankt produktionsbedingt. Gründe hierfür sind kleinste Schwankungen in der Indikatorfarbstoffmenge oder Schwankungen pH-Wertes des Materials des Indikatorfeldes, die sich insbesondere bei Indikatorfeldern unterschiedlicher Produktionschargen bemerkbar machen. Für eine schwach gepufferte wässrige Lösung kann somit unter Verwendung eines Indikatorfeldes einer ersten Produktionscharge noch der richtige pH-Wert angezeigt werden, während die Anzeige bei Verwendung eines Indikatorfeldes einer anderen Produktionscharge abweicht. Es ist somit möglich, dass sich aus verschiedenen Produktionschargen stammende Indikatorfelder beim Eintauchen in dieselbe wässrige Lösung unterschiedlich verfärben und entsprechend unterschiedliche pH-Werte liefern. Dies kann bis zu einem gewissen Grad durch eine längere Kontaktzeit des Indikatorfeldes mit der wässrigen Lösung bis zum Erreichen einer Farbkonstanz umgangen werden. Ein zusätzliches Waschen des Indikatorfeldes mit Wasser nach dessen Herstellung reicht indes nicht aus, um produktionsbedingte Schwankungen der Pufferkapazität vollständig zu kompensieren.

Weiteren Stand der Technik bilden die Druckschriften US 2,915,373 A, DE 530 530 C, WO 2009/133480 A2 und EP 3 614 141 A1.

Ausgehend von diesem Stand der Technik ist es eine Aufgabe der vorliegenden Erfindung, variierende inhärente Pufferkapazitäten der Indikatorfelder zu nivellieren, insbesondere variierende inhärente Pufferkapazitäten von Indikatorfeldern verschiedener Produktionschargen.

Zur Lösung dieser Aufgabe schafft die vorliegende Erfindung ein Verfahren zum Behandeln einer Vielzahl von Indikatorfeldern zur Bestimmung des pH-Wertes einer wässrigen Lösung, wobei die Indikatorfelder jeweils wenigstens einen Indikatorfarbstoff enthalten, der nicht ausblutend an einer Cellulose oder regenerierte Cellulose aufweisenden Schicht fixiert ist und innerhalb eines pH-Umschlagbereiches seine Farbe ändert, und wobei die Indikatorfelder voneinander abweichende Pufferkapazitäten aufweisen, dadurch gekennzeichnet, dass sämtliche Indikatorfelder mit einer die Pufferkapazitäten der Indikatorfelder beeinflussenden Imprägnierung von außen derart imprägniert werden, dass die Abweichungen nivelliert werden. Das erfindungsgemäße Verfahren ist in Anspruch 1 definiert. Durch die erfindungsgemäße Imprägnierung werden mit anderen Worten also variierende inhärente Pufferkapazitäten der Indikatorfelder, die insbesondere auf produktionsbedingte, selbst nur schwer abstellbare Unregelmäßigkeiten zurückzuführen sind, wie beispielsweise auf unbeabsichtigte Schwankungen des pH-Wertes des für die Indikatorfelder verwendeten Materials und/oder auf unbeabsichtigte Schwankungen der für die jeweiligen Indikatorfelder verwendeten Indikatorfarbstoffmengen, angeglichen, so dass die imprägnierten Indikatorfelder eine nahezu einheitliche Pufferkapazität aufweisen. Dies führt dazu, dass erfindungsgemäß behandelte Indikatorfelder, die in dieselbe wässrige Lösung eingetaucht werden, einheitliche Farbänderungen zeigen, wodurch die Verlässlichkeit und Reproduzierbarkeit von pH-Messungen deutlich verbessert wird. Erfindungsgemäße Indikatorfelder sind in Anspruch 6 definiert.

Gemäß einer Ausgestaltung der vorliegenden Erfindung stammen die mit dem erfindungsgemäßen Verfahren behandelten Indikatorfelder aus verschiedenen Produktionschargen. Indikatorfelder aus verschiedenen Produktionschargen weisen häufig deutlich voneinander abweichende Pufferkapazitäten auf, da die für die Chargen verwendeten Materialien meist ebenfalls aus verschiedenen Produktionschargen stammen und damit nicht einheitlich sind. Entsprechend ist die erfindungsgemäße Behandlung bei solchen Indikatorfeldern besonders effektiv.

Bei der Imprägnierung handelt es sich erfindungsgemäß um eine verdünnte, 0,001 molare Säure, insbesondere wenn der pH-Umschlagbereich im sauren pH-Bereich oder im neutralen pH-Bereich oder im unteren alkalischen pH-Bereich liegt, oder es handelt sich bei der Imprägnierung um eine verdünnte, 0,001 molare Lauge, insbesondere wenn der pH-Umschlagbereich im mittleren oder oberen alkalischen pH-Bereich liegt. Mit solchen verdünnten Säuren und Laugen wurden besonders gute Ergebnisse erzielt.

Bevorzugt werden die Indikatorfelder insbesondere nach ihrer Imprägnierung zur Herstellung von Testvorrichtungen jeweils an einem Träger befestigt, der vorteilhaft Kunststoff aufweist oder aus einem Kunststoff besteht, wobei der Träger insbesondere streifenförmig ausgebildet ist.

Ferner schafft die vorliegende Erfindung ein Indikatorfeld, das wenigstens einen Indikatorfarbstoff enthält, der nicht ausblutend fixiert ist, insbesondere an einer Cellulose oder regenerierte Cellulose aufweisenden Schicht, und innerhalb eines pH-Umschlagbereiches seine Farbe ändert, dadurch gekennzeichnet, dass das Indikatorfeld unter Einsatz eines erfindungsmäßen Verfahrens mit einer dessen Pufferkapazität beeinflussenden Imprägnierung von außen imprägniert ist.

Bei der Imprägnierung handelt es sich um eine verdünnte, 0,001 molare Säure, insbesondere wenn der pH-Umschlagbereich im sauren pH-Bereich oder im neutralen pH-Bereich oder im unteren alkalischen Bereich liegt.

Insbesondere wenn der pH-Umschlagbereich im mittleren oder oberen alkalischen pH-Bereich liegt, handelt es sich bei der Imprägnierung um eine verdünnte, 0,001 molare Lauge.

Ferner schafft die vorliegende Erfindung eine Testvorrichtung mit einem Träger und zumindest einem an dem Träger befestigten, erfindungsgemäß imprägnierten Indikatorfeld.

Bevorzugt weist der Träger Kunststoff auf oder besteht aus Kunststoff.

Gemäß einer Ausgestaltung der vorliegenden Erfindung ist der Träger streifenförmig und um ein Vielfaches länger als das Indikatorfeld ausgebildet. Entsprechend lässt sich das Indikatorelement einfach mit der Hand greifen und in eine wässrige Lösung eintauchen.

Weitere Merkmale und Vorteile der vorliegenden Erfindung werden anhand der nachfolgenden Beschreibung eines Verfahrens gemäß einer Ausführungsform der vorliegenden Erfindung zum Behandeln von Testvorrichtungen bzw. von Indikatorfeldern für solche Testvorrichtungen unter Bezugnahme auf die beiliegende Zeichnung deutlich. Darin ist
- Figur 1: eine perspektivische schematische Ansicht einer Testvorrichtung und
- Figur 2: eine perspektivische schematische Ansicht einer Testvorrichtung gemäß einer Ausführungsform der vorliegenden Erfindung, die sich ergibt, wenn ein Indikatorfeld der in Figur 1 dargestellten Testvorrichtung mit einem Verfahren gemäß einer Ausführungsform der vorliegenden Erfindung behandelt wird.

Die Testvorrichtung 1 dient zur Bestimmung des pH-Wertes einer wässrigen Lösung. Sie umfasst einen vorliegend streifenartig ausgebildeten Träger 2, der aus Kunststoff hergestellt ist oder aus Kunststoff besteht. An der Oberseite des Trägers 2 ist ein Indikatorfeld 3 vorgesehen, das wenigstens einen Indikatorfarbstoff enthält, der nicht ausblutend fixiert ist, insbesondere an einer Cellulose oder regenerierte Cellulose aufweisenden Schicht des Indikatorfeldes 3. Der Indikatorfarbstoff weist die Eigenschaft auf, seine Farbe innerhalb eines vorbestimmten pH-Umschlagbereiches zu ändern. Mit anderen Worten findet ein Farbwechsel statt, wenn der Indikatorfarbstoff in eine wässrige Lösung eingetaucht wird, deren pH-Wert innerhalb des pH-Umschlagbereiches liegt. Der Indikatorfarbstoff hat Säure-/Basenfunktion und verfügt somit über eine gewisse Säure-/Basenstärke bzw. Pufferkapazität. Um nun die besagte Farbänderung bzw. einen Farbumschlag des Indikatorfarbstoffs beim Eintauchen in eine wässrige Lösung zu bewirken, muss die wässrige Lösung ebenfalls eine gewisse Säure-/Basenstärke haben, um diese Pufferkapazität zu überwinden. Die Pufferkapazität sollte bei grundsätzlich identisch ausgebildeten Indikatorfeldern 3 konstant sein, um mit allen Indikatorfeldern 3 einheitliche und damit wiederholbare Messergebnisse erzielen zu können. Dies ist in der Praxis jedoch nicht der Fall, da die Pufferkapazität produktionsbedingten Schwankungen unterliegt, die insbesondere auf kleinste Schwankungen in der Indikatorfarbstoffmenge und/oder auf Schwankungen des pH-Wertes des Materials des Indikatorfeldes 3 zurückzuführen sind. Große Schwankungen der Pufferkapazität sind insbesondere dann zu beobachten, wenn man grundsätzlich identisch ausgebildete Indikatorfelder 3 miteinander vergleicht, die aus unterschiedlichen Produktionschargen stammen.

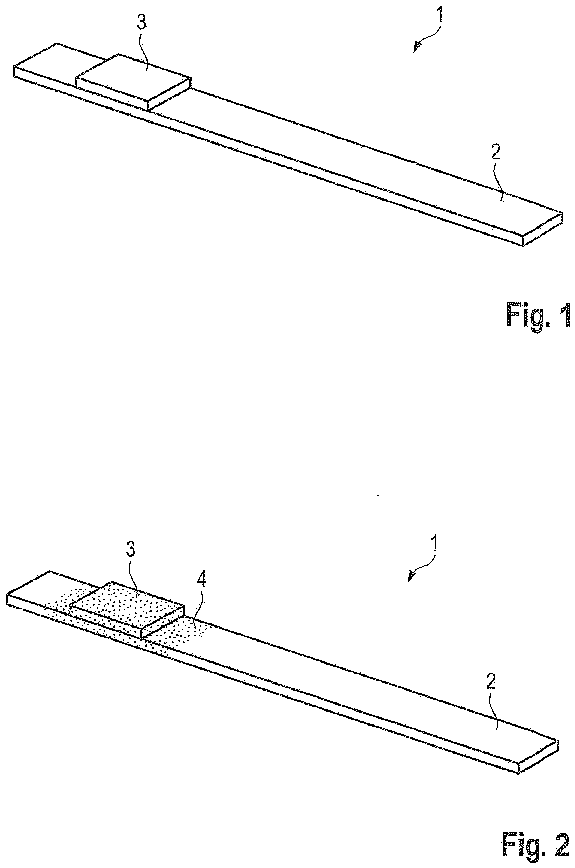

Im Rahmen von Versuchen wurde nunmehr festgestellt, dass sich produktionsbedingte Schwankungen der Pufferkapazität von Indikatorfeldern 3 nach deren Herstellung nivellieren lassen, indem die Indikatorfelder 3 mit einer die Pufferkapazität der Indikatorfelder 3 beeinflussenden Imprägnierung 4 von außen imprägniert werden, wie es in Figur 2 gezeigt ist. Als besonders geeignet haben sich verdünnte, 0,001 molare Säuren erwiesen, wenn der pH-Umschlagbereich des Indikatorfarbstoffes im sauren pH-Bereich und/oder im neutralen pH-Bereich und/oder im unteren alkalischen pH-Bereich liegt. Verdünnte, 0,001 molare Laugen bieten sich als Imprägnierung dann an, wenn der pH-Umschlagbereich im mittleren und/oder oberen alkalischen pH-Bereich liegt.

Nachfolgend wird eine Versuchsreihe beschrieben, anhand derer die Wirkung einer erfindungsgemäßen Imprägnierung deutlich wird.

Es wurden in einem ersten Schritt insgesamt sechs farbfixierte Indikatorfelder 3 ausgewählt, genauer gesagt jeweils zwei aus der gleichen Produktionscharge stammende Indikatorfelder 3 einer Gruppe aus insgesamt drei Gruppen, die sich hinsichtlich des pH-Umschlagbereiches voneinander unterscheiden und nachfolgend mit den Indizes 3A, 3B und 3C gekennzeichnet sind, siehe Tabelle 1. Die Indikatorfelder 3A und 3B haben einen Farbumschlag im pH-Bereich 4,0 bis 9,0 bzw. 4,5 bis 8,5. Der Farbumschlag des Indikatorfeldes 3C liegt im alkalischen pH-Bereich 7,5 bis 9,5.

**Tabelle 1**

| Eintrag | pH Umschlagsbereich | Farbänderung |
|---|---|---|
| 3A | 4,0 - 9,0 | orange - blaugrün |
| 3B | 4,5 - 8,5 | orange - grünblau |
| 3C | 7,5 - 9,5 | orange - violett |

Die aufgeführten Indikatorfelder 3A, 3B und 3C wurden in einem zweiten Schritt gasförmiger Essigsäure bzw. Ammoniak ausgesetzt. Die Essigsäure ausgesetzten Indikatorfelder 3A, 3B und 3C sind nachfolgend mit dem Index 1 versehen, die Ammoniak ausgesetzten Indikatorfelder 3A, 3B und 3C mit dem Index 2. Durch diese die den Indikatorfeldern 3 inhärenten Pufferkapazitäten verändernden Behandlungen mit Essigsäure und Ammoniak wurde eine saure Produktionscharge 3A₁, 3B₁ und 3C₁ und eine alkalische Produktionscharge 3A₂, 3B₂ und 3C₂ von Indikatorfeldern 3 simuliert. Die jeweiligen Farben der trockenen Indikatorfelder 3A₁, 3A₂, 3B₁, 3B₂, 3C₁ und 3C₂ sind in Tabelle 2 aufgeführt.

**Tabelle 2**

| Eintrag | 3A₁ Essigsäure (g) | 3A₂ Ammoniak (g) | 3B₁ Essigsäure (g) | 3B₂ Ammoniak (g) | 3C₁ Essigsäure (g) | 3C₂ Ammoniak (g) |
|---|---|---|---|---|---|---|
| trockenes Indikatorpapier | gelb-orange | türkis | orange-rot | türkis | gelb | gelb-orange |
| VE-Wasser | gelb-orange | türkis | rot-orange | dunkel-grün | gelb | gelb-orange |
| 0,001 M Salzsäure | gelb-orange | orange | orange | grün-rot | | |
| 0,001 M Natronlauge | - | - | - | - | gelb-rot | rot-violett |
| Titrisol pH3 (1: 10 verd.) | gelb-orange | grün | orange-rot | orange-rot | | |
| Titrisol pH 11 (1: 10 verd.) | - | - | - | - | rot-violett | violett |

Die manipulierten Indikatorfelder 3A₁, 3A₂, 3B₁, 3B₂, 3C₁ und 3C₂ wurden in einem dritten Schritt jeweils auf einen Träger 2 gesiegelt und in definierte Test-Lösungen eingetaucht. Die unterschiedlichen Farben der jeweiligen Indikatorfelder 3A₁, 3A₂, 3B₁, 3B₂, 3C₁ und 3C₂ sind weiterhin erkennbar.

Werden die Indikatorfelder 3A₁ und 3A₂ in schwach gepufferte Lösungen wie in 0,001 molare Salzsäure bzw. in eine 1:10 verdünnten Titrisol pH 3 Lösung eingetaucht, so sind ebenfalls unterschiedliche Farben zu erkennen, nämlich gelb-orange und orange bzw. gelb-orange und grün. Die Indikatorfelder 3B₁, 3B₂ zeigen nach dem Eintauchen in schwach gepufferte Lösungen wie in 0,001 molare Salzsäure eine orange bzw. grün-rote Farbreaktion. Nach Eintauchen in eine 1:10 verdünnte Titrisol pH 3 Lösung ist bei beiden Indikatorfeldern 3B₁ und 3B₂ eine orange-rote Farbreaktion zu beobachten. Die Indikatorfelder 3C₁ und 3C₂ zeigen nach dem Eintauchen in schwach gepufferte Lösungen wie in 0,001 molare Natronlauge bzw. 1:10 verdünnte Titrisol pH 3 Lösung unterschiedliche Farben, und zwar gelb-rot und rot-violett bzw. rot-violett und violett.

Zur Nivellierung der den Indikatorfeldern 3A₁, 3A₂, 3B₁, 3B₂, 3C₁ und 3C₂ inhärenten Pufferkapazitäten wurden die Indikatorfelder 3A₁, 3A₂, 3B₁, 3B₂, 3C₁ und 3C₂ gemäß einer Ausführungsform der vorliegenden Erfindung wie folgt behandelt:
Die mit gasförmiger Essigsäure und gasförmigem Ammoniak manipulierten Indikatorfelder 3A₁, 3A₂, 3B₁, 3B₂, 3C₁ und 3C₂ wurden mit einer Imprägnierung 4 versehen, siehe Figur 2. Für die Indikatorfelder 3A₁, 3A₂, 3B₁ und 3B₂ wurde als Imprägnierung 4 verdünnte Säure verwendet, vorliegend 0,001 molare Säure. Als Imprägnierung 4 für die Indikatorelemente 1C₁ und 1C₂ wurde hingegen 0,001 molar verdünnte Lauge verwendet.

Die erfolgreiche Nivellierung der Pufferkapazitäten der imprägnierten Indikatorfelder 3A₁, 3A₂, 3B₁, 3B₂, 3C₁ und 3C₂ zeigt sich gemäß Tabelle 3 in ähnlicher bis gleicher Farbreaktion beim Eintauchen der imprägnierten Indikatorfelder 3A₁, 3A₂, 3B₁, 3B₂, 3C₁ und 3C₂ in die dort angegebenen schwach gepufferten Prüflösungen, die den Prüflösungen gemäß Tabelle 2 entsprechen.

**Tabelle 3**

| Eintrag | 3A₁ Essigsäure (g) | 3A₂ Ammoniak (g) | 3B₁ Essigsäure (g) | 3B₂ Ammoniak (g) | 3C₁ Essigsäure (g) | 3C₂ Ammoniak (g) |
|---|---|---|---|---|---|---|
| trockenes Indikatorpapier | gelb-orange | grün | orange-rot | grün | gelb-orange | hellrot |
| VE-Wasser | gelb-orange | grün | rot-orange | dunkel-grün | gelb-orange | rot |
| 0,001 M Salzsäure | gelb-orange | gelb-orange | orange-rot | orange-rot | | |
| 0,001 M Natronlauge | - | - | - | - | rot-violett | violett |
| Titrisol pH3 (1:10 verd.) | gelb-orange | gelb-orange | orange-rot | orange-rot | | |
| Titrisol pH 11 (1:10 verd.) | - | - | - | - | violett | violett |

Im Ergebnis kann durch die erfindungsgemäße Nachimprägnierung von Indikatorfeldern 3 eine Nivellierung produktionsbedingter Schwankungen der den Indikatorfeldern 3 inhärenten Pufferkapazitäten erzielt werden, die produktionschargenübergreifend zu konstanten oder zumindest zu annähernd konstanten Messergebnissen führt. Auf diese Weise kann die Verlässlichkeit von pH-Messungen deutlich gesteigert werden.

An dieser Stelle sei darauf hingewiesen, dass die Indikatorfelder 3 bevorzugt bereits während der Herstellung der Indikatorfelder 3 mit der Imprägnierung 4 versehen werden, also bevor die Indikatorfelder zur Herstellung einer Testvorrichtung 1 an einem Träger 2 befestigt werden.

### Bezugszeichenliste

- 1: Indikatorelement
- 2: Träger
- 3: Indikatorfeld
- 4: Imprägnierung

## Patentansprüche

1. Verfahren zum Behandeln einer Vielzahl von Indikatorfeldern (3) zur Bestimmung des pH-Wertes einer wässrigen Lösung, wobei die Indikatorfelder (3) jeweils wenigstens einen Indikatorfarbstoff enthalten, der nicht ausblutend an einer Cellulose oder regenerierte Cellulose aufweisenden Schicht fixiert ist und innerhalb eines pH-Umschlagbereiches seine Farbe ändert, und wobei die Indikatorfelder (3) voneinander abweichende Pufferkapazitäten aufweisen, **dadurch gekennzeichnet, dass** sämtliche Indikatorfelder (3) mit einer die Pufferkapazitäten der Indikatorfelder (3) beeinflussenden Imprägnierung (4) von außen derart imprägniert werden, dass die Abweichungen der Pufferkapazitäten nivelliert werden, wobei es sich bei der Imprägnierung (4) um eine 0,001 molare Säure oder um eine 0,001 molare Lauge handelt.

2. Verfahren nach einem der vorhergehenden Ansprüche, **dadurch gekennzeichnet, dass** die Indikatorfelder (3) zur Herstellung von Testvorrichtungen (1) jeweils an einem Träger (2) befestigt werden.

3. Verfahren nach Anspruch 2, **dadurch gekennzeichnet, dass** die Indikatorfelder (3) nach ihrer Imprägnierung jeweils an einem Träger (2) befestigt werden.

4. Verfahren nach Anspruch 2 oder 3, **dadurch gekennzeichnet, dass** der jeweilige Träger (2) Kunststoff aufweist oder aus einem Kunststoff besteht.

5. Verfahren nach einem der Ansprüche 2 bis 4, **dadurch gekennzeichnet, dass** der jeweilige Träger (2) streifenförmig ausgebildet ist.

6. Indikatorfeld (3), das wenigstens einen Indikatorfarbstoff enthält, der nicht ausblutend an einer Cellulose oder regenerierte Cellulose aufweisenden Schicht fixiert ist und innerhalb eines pH-Umschlagbereiches seine Farbe ändert, **dadurch gekennzeichnet, dass** das Indikatorfeld (3) unter Einsatz eines Verfahrens nach einem der vorhergehenden Ansprüche mit einer dessen Pufferkapazität beeinflussenden Imprägnierung (4) von außen imprägniert ist.

7. Testvorrichtung (1) mit einem Träger (2) und zumindest einem an dem Träger (2) befestigten Indikatorfeld (3) nach Anspruch 6.

8. Testvorrichtung (1) nach Anspruch 7, **dadurch gekennzeichnet, dass** der Träger (2) Kunststoff aufweist oder aus Kunststoff besteht.

9. Testvorrichtung (1) nach Anspruch 7 oder 8, **dadurch gekennzeichnet, dass** der Träger (2) streifenförmig und um ein Vielfaches länger als das Indikatorfeld (3) ausgebildet ist.

## Claims

1. Method for treating a plurality of indicator fields (3) for determining the pH value of an aqueous solution, the indicator fields (3) each containing at least one indicator dye which is fixed in a non-bleeding manner to a layer comprising cellulose or regenerated cellulose and changes its color within a pH changeover range, and wherein the indicator fields (3) have buffer capacities which differ from one another, **characterized in that** all indicator fields (3) are impregnated from the outside with an impregnation (4) which influences the buffer capacities of the indicator fields (3) in such a way that the deviations in the buffer capacities are levelled out, wherein the impregnation (4) is a 0.001 molar acid or a 0.001 molar base.

2. Method according to one of the preceding claims, **characterized in that** the indicator fields (3) for producing test devices (1) are each attached to a carrier (2).

3. Method according to claim 2, **characterized in that** the indicator fields (3) are each attached to a carrier (2) after their impregnation.

4. Method according to claim 2 or 3, **characterized in that** the respective carrier (2) comprises plastic or consists of a plastic.

5. Method according to one of claims 2 to 4, **characterized in that** the respective carrier (2) is strip-shaped.

6. Indicator field (3) which contains at least one indicator dye which is fixed in a non-bleeding manner to a layer comprising cellulose or regenerated cellulose and changes its color within a pH changeover range, **characterized in that** the indicator field (3) is impregnated from the outside with an impregnation (4) which influences its buffer capacity, using a method according to one of the preceding claims.

7. Test device (1) with a carrier (2) and at least one indicator field (3) attached to the carrier (2) according to claim 6.

8. Test device (1) according to claim 7, **characterized in that** the carrier (2) comprises plastic or consists of plastic.

9. Test device (1) according to claim 7 or 8, **characterized in that** the carrier (2) is strip-shaped and many times longer than the indicator field (3).

## Revendications

1. Procédé de traitement d'une pluralité de champs indicateurs (3) pour déterminer le pH d'une solution aqueuse, les champs indicateurs (3) contenant chacun au moins un colorant indicateur qui est fixé, sans saigner, sur une couche présentant de la cellulose ou de la cellulose régénérée et qui change de couleur à l'intérieur d'une zone de changement de pH, et les champs indicateurs (3) présentant des capacités tampons divergenter les unes des autres, **caractérisé en ce que** tous les champs indicateurs (3) sont imprégnés de l'extérieur avec une imprégnation (4) influençant les capacités tampons des champs indicateurs (3) de telle sorte que les diverquences des capacités tampons sont nivelés, l'imprégnation (4) étant un acide 0,001 molaire ou une base 0,001 molaire.

2. Procédé selon l'une des revendications précédentes, **caractérisé en ce que** les champs indicateurs (3) sont fixés chacun à un support (2) pour la fabrication de dispositifs de test (1).

3. Procédé selon la revendication 2, **caractérisé en ce que** les champs indicateurs (3) sont fixés chacun à un support (2) après leur imprégnation.

4. Procédé selon la revendication 2 ou 3, **caractérisé en ce que** le support respectif (2) présente une matière plastique ou est constitué d'une matière plastique.

5. Procédé selon l'une des revendications 2 à 4, **caractérisé en ce que** le support respectif (2) est réalisé en forme de bande.

6. Champ indicateur (3), qui contient au moins un colorant indicateur, qui est fixé, sans saigner, sur une couche présentant de la cellulose ou de la cellulose régénérée et qui change de couleur à l'intérieur d'une zone de changement de pH, **caractérisé en ce que** le champ indicateur (3) est imprégné de l'extérieur, en utilisant un procédé selon l'une des revendications précédentes, avec une imprégnation (4) influençant sa capacité tampon.

7. Dispositif de test (1) comprenant un support (2) et au moins un champ indicateur (3) fixé au support (2) selon la revendication 6.

8. Dispositif de test (1) selon la revendication 7, **caractérisé en ce que** le support (2) comprend du plastique ou est constitué de plastique.

9. Dispositif de test (1) selon la revendication 7 ou 8, **caractérisé en ce que** le support (2) est en forme de bande et est plusieurs fois plus long que le champ indicateur (3).
